# EUROPÄISCHE PATENTANMELDUNG

(11) **EP 2 289 299 A1**
(43) Veröffentlichungstag der Anmeldung: **02.03.2011**
(21) Anmeldenummer: 10401141.6
(22) Anmeldetag: 18.08.2010
(51) Int. Cl.: A01C 7/04

(54) **Pneumatische Einzelkornsämaschine**

(30) Priorität: 01.09.2009 DE 102009043915
(71) Anmelder: Amazonen-Werke H. Dreyer GmbH & Co. KG, 49205 Hasbergen (DE)
(72) Erfinder: Brüggemann, Klaus, 27777 Ganderkesee (DE); Tiessen, Reimer Uwe, 26135 Oldenburg (DE)

(57) **Zusammenfassung**

Pneumatische Einzelkornsämaschine mit einem Wandungen aufweisenden Vereinzelungsgehäuse (1), wobei in dem Vereinzelungsgehäuse (1) der Saatgutvorratsbehälter und zumindest eine drehbar angetriebene Vereinzelungstrommel (2) angeordnet ist, wobei in dem Umfangsmantel der Vereinzelungstrommel kreisförmig in Perforationsreihen (4) angeordnete Perforationen (5) angebracht sind, wobei ein Gebläse, mittels welchem eine Druckdifferenz zwischen dem Innenraum der Vereinzelungstrommel (2) und dem Außenbereich der Vereinzelungstrommel (2) erzeugbar ist, vorhanden ist, so dass wenn die Vereinzelungstrommel (2) durch den Saatgutvorrat geführt wird, sich an den Perforationen (5) der perforierten Trommel Samenkörner anlagern, wobei die Wandungen des Vereinzelungsgehäuses (1) den Saatgutvorratsbehälter und den mit dem ein Gebläsegehäuse (7) aufweisenden Gebläse verbundenen Luftkanal (10) bilden. Um eine kompakt bauende pneumatische Einzelkornsämaschine zu schaffen, bei welcher das Gebläse des Vereinzelungsgehäuse der Einzelkornsämaschine unmittelbar zugeordnet ist, ist vorgesehen, dass das Gebläsegehäuse zumindest teilweise von den Wandungen (9,10) des Vereinzelungsgehäuses und/oder des Saatgutvorratsbehälters und/oder des Luftkanals gebildet wird.

## Beschreibung

Die Erfindung betrifft eine pneumatische Einzelkornsämaschine gemäß des Oberbegriffes des Patentanspruches 1.

Durch die DE 10 2007 021 695 A1 ist eine derartige pneumatische Einzelkornsämaschine bekannt. Bei dieser pneumatischen Einzelkornsämaschine ist das Gebläse mittels eines Verbindungselementes unmittelbar an dem Gehäuse des Vereinzelungsorgans angeordnet. Durch die Anordnung des separat ausgestalteten und ein eigenes Gebläsegehäuse aufweisendes Gebläse ergibt sich eine relativ groß bauende Vereinzelungseinheit mit einem Gebläse bei einer pneumatischen Sämaschine.

Der Erfindung liegt die Aufgabe zugrunde, eine kompakt bauende pneumatische Einzelkornsämaschine zu schaffen, bei welcher das Gebläse des Vereinzelungsgehäuse der Einzelkornsämaschine unmittelbar zugeordnet ist.

Diese Aufgabe wird erfindungsgemäß dadurch gelöst, dass das Gebläsegehäuse zumindest teilweise von den Wandungen des Vereinzelungsgehäuses und/oder des Saatgutvorratsbehälters und/oder des Luftkanals gebildet wird. Infolge dieser Maßnahme wird das Gebläsegehäuse des Gebläses unmittelbar dem Vereinzelungsgehäuse zugeordnet und Teil von diesem, so dass eine äußerst kompakt bauende Vereinzelungs- und Gebläseeinheit sich ergibt.

Eine besonders kompakte Vereinzelungs- und Gebläseeinheit lässt sich dadurch erreichen, dass das Gebläse in integrierter Weise in dem Vereinzelungsgehäuse angeordnet ist.

Ebenfalls lässt sich eine äußerst kompakte Ausgestaltung einer Vereinzelungs- und Gebläseeinheit dadurch erreichen, dass das Gebläse in integrierter Weise in den Luftkanal angeordnet ist.

Bei einer Einzelkornsämaschine, bei dem das Gebläse einen Gebläseläufer ausweist, ist vorgesehen, dass der Gebläseläufer in dem von Teilbereichen der Wandungen des Vereinzelungsgehäuse gebildeten Gebläsegehäuse angeordnet ist. Hierdurch ergibt sich eine äußerst kompakte Anordnung eines Gebläse mit dem Vereinzelungsgehäuse.

Weitere Einzelheiten der Erfindung sind der Beispielsbeschreibung und den Zeichnungen zu entnehmen. Hierbei zeigen
- Fig. 1: das Vereinzelungsgehäuse mit der Vereinzelungstrommel und zugeordnetem Gebläse ohne Darstellung des Saatgutbehälters in perspektivischer Darstellung und
- Fig. 2: das Vereinzelungsgehäuse mit der Vereinzelungstrommel und zugeordnete Gebläse ohne Darstellung des Saatgutbehälters in perspektivischer Darstellung, wobei die Wandungen des Gebläsegehäuses zur besseren Erkennung der Anordnung des Gebläseläufers des Gebläses abgenommen sind.

Die pneumatische Einzelkornsämaschine weist das Vereinzelungsgehäuse 1 auf, indem die Vereinzelungstrommel 2 angeordnet ist. Die Vereinzelungstrommel 2 ist in dem Vereinzelungsgehäuse 1 drehbar gelagert und wird mittels einer als Elektromotor 3 ausgebildeten motorischen Antriebsvorrichtung in Rotation versetzt. Die Vereinzelungstrommel 2 weist in Perforationsreihen 4 angeordnete Perforationen 5 auf. Wenn die Perforationen 5 durch den Saatgutvorrat im Vereinzelungsgehäuse 1 geführt werden, lagern sich aufgrund der an den Perforationen 5 anliegenden Druckdifferenzen Samenkörner in vereinzelter Weise an. Oberhalb des Vereinzelungsgehäuses 1 ist in bekannter und daher nicht dargestellter Weise sowie der Übersichtlichkeit halber ein nicht dargestellter Saatgutbehälter angeordnet.

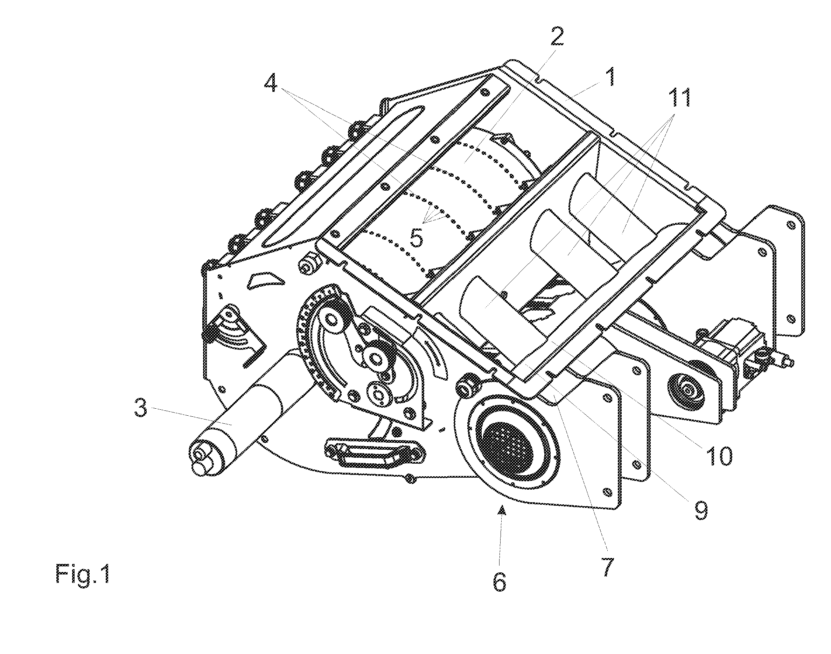

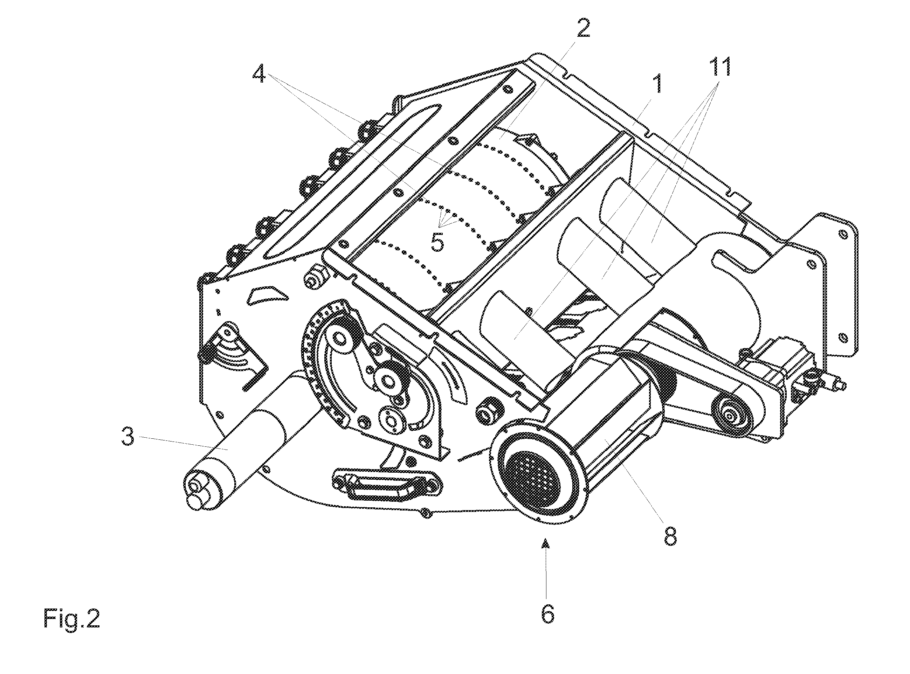

Auf der einen Seite des Vereinzelungsgehäuses 1 ist das Gebläse 6 angeordnet, mittels welchem die an den Perforationen 5 anliegende Druckdifferenz erzeugt wird. Das Gebläsegehäuse 7 des Gebläses 6, welches den Gebläseläufer 8 des Gebläses 6 umschließt weist, Wandungen 9 auf, die Teilbereiche des Vereinzelungsgehäuses 1 sind. Somit wird das Gebläsegehäuse 7 zumindest teilweise von den Wandungen 9 des Vereinzelungsgehäuses 1 und/oder des Saatgutvorratsbehälters und/oder des Luftkanals 10 gebildet. Die Wandung 9 zwischen dem Vereinzelungsgehäuse 1 und dem Gebläseläufer 8 des Gebläses 6 bildet die Trennwand und Abschlusswand 10 der Saatgutführung zu dem Saatgutvorrat, der an der Vereinzelungstrommel 2 ausmündet. Wie in den Fig. 1 und 2 zu entnehmen ist, ist somit das Gebläse 6 in integrierter Weise in dem Vereinzelungsgehäuse 1 angeordnet. Somit ist ein Teil 9 der Wandung des Gebläsegehäuses 7 Teil des Vereinzelungsgehäuses 1. Hierbei ist ebenfalls der Luftkanal 10 integriert in die Wandung 7 des Gebläses 6 und des Vereinzelungsgehäuses 1 angeordnet.

Von dem Gebläsegehäuse 7 zweigen für Verbindungskanäle 11 zu dem Bereich des Vereinzelungsgehäuse 1 ab, in dem die Vereinzelungstrommel 2 angeordnet ist, um den oberen Bereich der Vereinzelungstrommel 2 mit einer ausreichenden Druckdifferenz zu versorgen.

## Patentansprüche

1. Pneumatische Einzelkornsämaschine mit einem Wandungen aufweisenden Vereinzelungsgehäuse, wobei in dem Vereinzelungsgehäuse der Saatgutvorratsbehälter und zumindest eine drehbar angetriebene Vereinzelungstrommel angeordnet ist, wobei in dem Umfangsmantel der Vereinzelungstrommel kreisförmig in Perforationsreihen angeordnete Perforationen angebracht sind, wobei ein Gebläse, mittels welchem eine Druckdifferenz zwischen dem Innenraum der Vereinzelungstrommel und dem Außenbereich der Vereinzelungstrommel erzeugbar ist, vorhanden ist, so dass wenn die Vereinzelungstrommel durch den Saatgutvorrat geführt wird, sich an den Perforationen der perforierten Trommel Samenkörner anlagern, wobei die Wandungen des Vereinzelungsgehäuses den Saatgutvorratsbehälter und den mit dem ein Gebläsegehäuse aufweisenden Gebläse verbundenen Luftkanal bilden, **dadurch gekennzeichnet, dass** das Gebläsegehäuse ( 7 ) zumindest teilweise von den Wandungen ( 9, 10 ) des Vereinzelungsgehäuses ( 1 ) und/oder des Saatgutvorratsbehälters und/oder des Luftkanals gebildet wird.

2. Einzelkornsämaschine nach Anspruch 1, **dadurch gekennzeichnet, dass** das Gebläse (6) in integrierter Weise in dem Vereinzelungsgehäuse ( 1 ) angeordnet ist.

3. Einzelkornsämaschine nach Anspruch 1, **dadurch gekennzeichnet, dass** das Gebläse ( 6 ) in integrierter Weise in dem Luftkanal angeordnet ist.

4. Einzelkornsämaschine nach Anspruch 1, wobei das Gebläse einen Gebläseläufer aufweist, **dadurch gekennzeichnet, dass** der Gebläseläufer ( 8 ) in dem von Teilbereichen ( 9, 10 ) der Wandungen des Vereinzelungsgehäuse ( 1 ) gebildeten Gebläsegehäuse ( 7 ) angeordnet ist.

5. Einzelkornsämaschine nach einem oder mehreren der vorstehenden Ansprüche, **dadurch gekennzeichnet, dass** das Gebläsegehäuse ( 7 ) zu der Trommel ( 2 ) führende und in dem Vereinzelungsgehäuse ( 1 ) angeordnete Verbindungskanäle ( 11 ) aufweist.
